(19) Europäisches Patentamt
European Patent Office
Office européen des brevets

(11) **EP 4 317 069 A1**

(12) **EUROPEAN PATENT APPLICATION**
published in accordance with Art. 153(4) EPC

(43) Date of publication:
**07.02.2024 Bulletin 2024/06**

(21) Application number: **22780911.8**

(22) Date of filing: **29.03.2022**

(51) International Patent Classification (IPC):
*C01G 23/047* (2006.01)   *H01M 4/86* (2006.01)
*H01B 1/02* (2006.01)   *H01M 8/10* (2016.01)
*C25B 11/067* (2021.01)   *C25B 11/081* (2021.01)
*C25B 9/00* (2021.01)   *C25B 1/04* (2021.01)

(52) Cooperative Patent Classification (CPC):
**C01G 23/047; C25B 1/04; C25B 9/00;
C25B 11/067; C25B 11/081; H01B 1/02;
H01M 4/86; H01M 8/10;** Y02E 60/50

(86) International application number:
**PCT/JP2022/015404**

(87) International publication number:
**WO 2022/210700 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021 JP 2021061113**

(71) Applicant: Sakai Chemical Industry Co., Ltd.
**Sakai-shi, Osaka 590-8502 (JP)**

(72) Inventors:
• **KISHI, Miho**
**Sakai-shi, Osaka 590-0985 (JP)**
• **TSUTSUMI, Hiroshi**
**Sakai-shi, Osaka 590-0985 (JP)**
• **YOSHIKAWA, Yusuke**
**Sakai-shi, Osaka 590-0985 (JP)**
• **UEMURA, Akihiro**
**Sakai-shi, Osaka 590-0985 (JP)**

(74) Representative: **Cabinet Beau de Loménie**
**158, rue de l'Université**
**75340 Paris Cedex 07 (FR)**

(54) **ELECTRICALLY CONDUCTIVE MATERIAL**

(57)    The present invention aims to provide an electrically conductive material that can have high conductivity even when it contains a smaller amount of a noble metal than usual. The present invention relates to an electrically conductive material containing rutile titanium oxide and iridium oxide on the rutile titanium oxide, a percentage of a total iridium element in the electrically conductive material being 30 mass% or less based on a total 100 mass% of the titanium oxide and the iridium, a percentage of the iridium element as measured by XPS being 30 at% or more based on a total 100 at% of the titanium element and the iridium element.

EP 4 317 069 A1

**Description**

TECHNICAL FIELD

The present invention relates to electrically conductive materials. Specifically, the present invention relates to an electrically conductive material useful for electrode materials and the like for water electrolysis cells and fuel cells.

BACKGROUND ART

Fuel cells are devices that generate electric power by electrochemically reacting fuel such as hydrogen or alcohol with oxygen, and are classified into polymer electrolyte fuel cells (PEFCs), phosphoric acid fuel cells (PAFCs), molten-carbonate fuel cells (MCFCs), solid oxide fuel cells (SOFCs), and the like, according to factors such as the type of electrolyte and operating temperature. Polymer electrolyte fuel cells, for example, are used as stationary power sources or for fuel cell vehicles, and are thus expected to maintain desired power generation performance for a long period of time.

A polymer electrolyte fuel cell includes a polymer membrane (ion-exchange membrane) having ion conductivity as an electrolyte. A material (Pt/C) in which platinum is supported on a carbon support has been conventionally used as an electrode material. Carbon, which has a high specific surface area and high conductivity, has been used as a support for noble metal catalysts, but carbon problematically reacts with water at high potential to decompose into $CO_2$. Among electrodes, the reaction at an anode ($H_2 \rightarrow 2H^+ + 2e^-$) is faster than the reaction at a cathode ($O_2 + 4H^+ + 4e^- \rightarrow 2H_2O$), and requires a smaller amount of catalyst than the reaction at the cathode. On the other hand, in an anode, a fuel starvation state causes a high potential state of higher than 2 V, and the anode needs to have higher durability against high potential compared to the cathode.

Water electrolysis is the most practical method for producing hydrogen and includes two main methods: solid polymer water electrolysis and alkaline electrolysis. Of these, solid polymer water electrolysis can be operated at a higher current density compared to alkaline electrolysis, and can be advantageously implemented in a compact system. The electrolysis reaction of water theoretically needs a voltage of 1.23 V or higher under standard conditions (25°C, 1 atm), and a water electrolysis cell usually uses a voltage as high as about 2.0 V.

In recent years, carbon-free electrically conductive supports have been developed for fuel cell electrodes from the viewpoint of high-potential durability. A core-shell catalyst in which Ti perovskite oxide is located on the surface of $TiO_2$ (see Patent Literature 1) and a catalyst in which a large amount of noble metal is located on the surface of an electrically non-conductive oxide (see Patent Literature 2) have been proposed.

Anodes (oxygen generating electrodes) in water electrolysis cells need a catalyst having oxygen generating reaction activity, and iridium has been known to have high activity (see Patent Literatures 3 and 4).

CITATION LIST

- Patent Literature

Patent Literature 1: JP 2017-183285 A
Patent Literature 2: WO 2013/092568
Patent Literature 3: JP 2008-274326 A
Patent Literature 4: JP 2003-166093 A

SUMMARY OF INVENTION

- Technical Problem

As described above, various electrodes have been developed for polymer electrolyte fuel cells. The electrode described in Patent Literature 1 does not include a carbon support in order to prevent corrosion deterioration of carbon that occurs during spikes in electrical potential, but is insufficient in electronic conductivity. Thus, carbon is used as a conductive aid, which may lead to a risk of corrosion due to high potential. The electrode described in Patent Literature 2 contains 50% or more of a noble metal component in order to form electrically conductive paths made of noble metal. This leads to a problem of the cost of the electrode members.

Materials of anodes in polymer electrolyte electrolysis cells are required to have high electronic conductivity and excellent high-potential durability. When iridium is used as a catalyst for an anode, iridium is desirably used on a support from the viewpoint of cost and other factors. Currently, the selection of materials satisfying the above properties and suitable for supports for iridium is limited. Thus, iridium or iridium oxide alone is usually used as a catalyst without supporting on a support. Since formation of an anode requires a certain bulk of catalyst, a large amount of expensive iridium is used. Thus, the amount of iridium is required to be reduced.

The present invention has been made in view of the current situation, and aims to provide an electrically conductive material that can have high conductivity even when it contains a smaller amount of a noble metal than usual.

- Solution to Problem

The present inventors conducted various studies on electrically conductive materials and found the following. When rutile titanium oxide and iridium oxide are used in combination, the surface of the titanium oxide is sufficiently coated with the iridium oxide. In this case, even when the total amount of iridium element is small, excellent conductivity can be achieved as long as the percentage of the iridium element as measured by XPS, which corresponds to the amount of iridium element present on the surface of the electrically conductive material, is 30 at% or more based on a total 100 at% of the titanium element and the iridium element. Thereby, the above problems can be solved admirably, and the present invention has been completed.

That is, the present invention relates to an electrically conductive material containing:

rutile titanium oxide; and
iridium oxide on the rutile titanium oxide;
a percentage of a total iridium element in the electrically conductive material being 30 mass% or less based on a total 100 mass% of the titanium oxide and the iridium,
a percentage of the iridium element as measured by XPS being 30 at% or more based on a total 100 at% of the titanium element and the iridium element.

Preferably, the rutile titanium oxide has a BET specific surface area of less than 50 m$^2$/g.

The present invention also relates to an electrode material containing the electrically conductive material.

Preferably, in the electrode material, the electrically conductive material supports or is mixed with at least one of a noble metal or a noble metal-containing compound, the noble metal containing at least one selected from platinum, iridium, and ruthenium, the noble metal-containing compound containing at least one selected from platinum, iridium, and ruthenium.

Preferably, the electrode material is for use in a fuel cell.

Preferably, the electrode material is for use in a water electrolysis cell.

The present invention also relates to an electrode containing the electrode material.

The present invention also relates to a fuel cell containing the electrode.

The present invention also relates to a water electrolysis cell containing the electrode.

The present invention also relates to a method of producing the electrically conductive material, the method including supporting iridium oxide on rutile titanium oxide.

- Advantageous Effects of Invention

The electrically conductive material of the present invention having the structure described above can have high conductivity even when it contains a smaller amount of a noble metal than usual, and thus can improve battery performance. Such an electrically conductive material is suitable as an electrode material and the like for water electrolysis cells and fuel cells.

BRIEF DESCRIPTION OF DRAWINGS

FIG. 1 is a TEM photograph of an electrically conductive material obtained in Example 1.
FIG. 2 is a TEM photograph of an electrically conductive material obtained in Example 2.
FIG. 3 is a TEM photograph of an electrically conductive material obtained in Example 3.
FIG. 4 is a TEM photograph of an electrically conductive material obtained in Example 4.
FIG. 5 is a TEM photograph of an electrically conductive material obtained in Comparative Example 1.
FIG. 6 is a TEM photograph of an electrically conductive material obtained in Comparative Example 2.
FIG. 7 is a TEM photograph of an electrically conductive material obtained in Comparative Example 3.
FIG. 8 is a TEM photograph of an electrically conductive material obtained in Comparative Example 4.

DESCRIPTION OF EMBODIMENTS

Preferred embodiments of the present invention are specifically described below, but the present invention is not limited to the following description, and modification may be suitably made without departing from the gist of the present invention. A combination of two or more of individual preferred embodiments of the present invention described below is also a preferred embodiment of the present invention.

<Electrically conductive material>

The electrically conductive material of the present invention contains rutile titanium oxide and iridium oxide on the rutile titanium oxide, a percentage of a total iridium element in the electrically conductive material being 30 mass% or less based on a total 100 mass% of the titanium oxide and the iridium, a percentage of the iridium element as measured by XPS being 30 at% or more based on a total 100 at% of the titanium element and the iridium element.

When rutile titanium oxide and iridium oxide are used in combination in the electrically conductive material, the surface of the titanium oxide can be coated with the iridium oxide. As a result, even when the total amount of iridium is small, the electrically conductive paths can be sufficiently formed, and the electrically conductive material has excellent conductivity and low volume resistance.

In the present invention, rutile titanium oxide has a rutile crystalline phase as a main phase. As long as the titanium oxide in the present invention contains a rutile crystalline phase as a main phase, it may contain an anatase phase, a brookite phase, a magnelli phase, a corundum phase, or a NaCl phase as a sub-phase, for example.

The phrase "contains a rutile crystalline phase as a main phase" used herein means that the X-ray powder diffraction pattern of the titanium oxide particulate powder (Cu K$\alpha$, angle range in measurement: $2\theta = 10°$ to $70°$) contains diffraction peaks in the diffraction angle ranges of $2\theta = 27.4° \pm 2°$, $36.1° \pm 2°$, and $54.3° \pm 2°$; and contains no diffraction peak having an intensity exceeding 50%, preferably an intensity exceeding 30%, more preferably an intensity exceeding 25% of the intensity of the maximum peak appearing within the angle range in the measurement, outside the ranges of $2\theta = 27.4° \pm 2°$, $36.1° \pm 2°$, $39.2° \pm 2°$, $41.2° \pm 2°$, $44.1° \pm 2°$, $54.3° \pm 2°$, and $56.6° \pm 2°$.

Specific measurement conditions of the X-ray powder diffraction pattern are described in EXAMPLES below.

When the XRD measurement data contains a large amount of noise as a whole, smoothing or background removal may be conducted using analysis software attached to the XRD system (e.g., X-ray powder diffraction pattern comprehensive analysis software "PDXL2" attached to an X-ray diffractometer (RINT-TTR3) available from Rigaku Corporation) before determination.

In the electrically conductive material of the present invention, the percentage of the iridium element as measured by XPS is 30 at% or more based on a total 100 at% of the titanium element and the iridium element.

The percentages of elements on the surface of the electrically conductive material are important for the electrically conductive material of the present invention. The composition of elements present on the electrically conductive material can be analyzed by X-ray photoelectron spectroscopy (XPS). Therefore, the percentage of the iridium element as measured by XPS corresponds to the percentage of iridium element on the surface of the electrically conductive material.

As described above, when rutile titanium oxide and iridium oxide are used in combination in the electrically conductive material of the present invention, the surface of the titanium oxide is coated with the iridium oxide. Thus, even when the absolute amount of iridium element is small, the percentage of iridium element on the surface of the electrically conductive material can be increased.

The percentage of the iridium element as measured by XPS within the above range indicates that the percentage of iridium element on the surface of the electrically conductive material is sufficient, and the electrically conductive paths can be sufficiently formed. Such an electrically conductive material of the present invention has excellent conductivity.

The percentage of the iridium element as measured by XPS is preferably 40 at% or more, more preferably 50 at% or more, still more preferably 60 at% or more, particularly preferably 70 at% or more.

The measurement of the amount of iridium element by XPS can be performed under the conditions described in EXAMPLES.

The electrically conductive material contains iridium oxide. Such an electrically conductive material has higher durability. The iridium oxide may have a crystal structure or may not have a crystal structure (amorphous), and may be hydroxide or hydrate. The iridium oxide may include two or more of these. Herein, "IrOx" means an amorphous iridium oxide, an iridium hydroxide, an iridium hydrate, or an iridium oxide containing at least one of these. The electrically conductive material may contain an iridium element in a form other than oxide, such as metal iridium.

The percentage of iridium in a form other than oxide is not limited as long as the volume resistance is sufficiently low to obtain performance as an electrode material. It is preferably 50 at% or less based on the total 100 at% of the iridium element. It is more preferably 25 at% or less.

The percentage of the total iridium element in the electrically conductive material is preferably 25 mass% or less based on the total 100 mass% of the titanium oxide and iridium. With the percentage of the total iridium element within the above range, the cost can be sufficiently reduced. The percentage of the total iridium element is preferably 1 to 25 mass%, more preferably 3 to 20 mass%, still more preferably 5 to 20 mass%, particularly preferably 10 to 20 mass%.

The percentage of the total iridium element in the electrically conductive material can be measured by X-ray fluorescence (XRF) analysis.

The rutile titanium oxide preferably has a BET specific surface area of less than 50 $m^2/g$.

Such a rutile titanium oxide is more sufficiently coated with the iridium element, and the electrically conductive paths can be more sufficiently formed. The BET specific surface area is more preferably 30 $m^2/g$ or less, still more preferably 20 $m^2/g$ or less. The BET specific surface area is preferably 1 $m^2/g$ or more, more preferably 5 $m^2/g$ or more, still more preferably 8 $m^2/g$ or more.

The BET specific surface area refers to the specific surface area obtained by the BET method which is one of specific surface area measurement methods. The specific surface area refers to the surface area per unit mass of an object. The BET method is a gas adsorption method in which particles of gas such as nitrogen are adsorbed onto solid particles, and the specific surface area is determined from the adsorbed amount. Herein, the specific surface area can be determined by the technique described in EXAMPLES below.

The BET specific surface area of the electrically conductive material of the present invention is preferably less than 50 $m^2/g$, but is not limited thereto. It is more preferably 30 $m^2/g$ or less, still more preferably 20 $m^2/g$ or less. The BET specific surface area of the electrically conductive material is preferably 1 $m^2/g$ or more, more preferably 5 $m^2/g$ or more.

In the electrically conductive material of the present invention, the iridium oxide is present on the rutile titanium oxide. Preferably, the iridium oxide is supported on the rutile titanium oxide.

The electrically conductive material of the present invention may contain an optional different component.

Examples of the different component include niobium, tantalum, tungsten, molybdenum, tin, and ruthenium and oxides thereof. The oxide may have a crystal structure or may not have a crystal structure (amorphous), or may be a hydrate.

The percentage of the different component in the electrically conductive material is preferably 30 mass% or less relative to 100 mass% of titanium oxide. It is more preferably 10 mass% or less, still more preferably 5 mass% or less.

<Method of producing electrically conductive material>

The electrically conductive material of the present invention may be produced by any method. It is preferably produced by supporting iridium oxide on rutile titanium oxide. The present invention encompasses a method of producing an electrically conductive material including supporting iridium oxide on rutile titanium oxide.

Herein, the term "support/supported/supporting/loaded" means that a noble metal or its oxide is supported on the surface of titanium oxide or iridium oxide. A noble metal or its oxide may be attached to part of the surface, or a noble metal or its oxide may form a layer. The oxide of noble metal may have a crystal structure or may not have a crystal structure (amorphous), and may be a hydrate.

The supporting step is not limited as long as iridium oxide is supported on rutile titanium oxide. Preferably, a mixture of rutile titanium oxide and an iridium-containing compound is fired. More preferably, a slurry containing rutile titanium oxide and an iridium-containing compound is prepared and dried, and the dried product is fired. In other words, preferably, a step of preparing a slurry containing rutile titanium oxide and an iridium-containing compound and a step of drying the slurry and firing the resulting product are performed.

The slurry preparation step is not limited as long as the slurry is prepared by mixing rutile titanium oxide and an iridium-containing compound. Preferably, a slurry containing rutile titanium oxide is mixed with an iridium-containing compound solution. More preferably, an iridium-containing compound solution is added to a slurry containing a rutile titanium oxide with stirring in a vessel, followed by mixing and stirring.

The slurry preparation step preferably includes neutralizing by adding a base during or after mixing the rutile titanium oxide and the iridium-containing compound.

Non-limiting examples of the base include alkali metal hydroxides, alkali metal carbonates, and ammonia. Alkali metal hydroxides are preferred, and sodium hydroxide is more preferred.

The temperature in the slurry preparation step is preferably 50°C to 100°C, but it not limited thereto. It is more preferably 60°C to 80°C.

The iridium-containing compound is not limited as long as it contains an iridium element. Examples include inorganic salts such as nitrates, chlorides, and phosphates; and organic acid salts such as acetates, tris(acetylacetonato) iridium (III), and oxalate. Preferred among these are nitrates and chlorides, with chlorides being more preferred.

The iridium-containing compound solution is not limited as long as it is prepared by dissolving an iridium-containing compound in a solvent. The iridium-containing compound solution preferably contains a reducing agent.

Non-limiting examples of the reducing agent include hydrazine chloride, hydrazine, sodium borohydride, alcohols, hydrogen, sodium thiosulfate, citric acid, sodium citrate, L-ascorbic acid, formaldehyde, ethylene, and carbon monoxide. Hydrazine chloride is preferred. The amount of the reducing agent is preferably 0.1 to 1 time the molar equivalent of iridium in the liquid mixture, but is not limited thereto.

The firing temperature in the step of firing the mixture of rutile titanium oxide and an iridium-containing compound is preferably 100°C to 750°C, but is not limited thereto. It is more preferably 200°C to 750°C, still more preferably 300°C to 750°C. When the firing temperature is 750°C or lower, a more preferred BET specific surface area can be achieved, and the decrease in the amount of iridium element present on the surface of the electrically conductive material due to the diffusion of iridium oxide can be sufficiently suppressed.

The firing temperature is more preferably 200°C to 500°C, still more preferably 300°C to 500°C.

Herein, the firing temperature means the highest temperature reached in the firing step.

The firing time in the firing step, in other words, the time of retaining the firing temperature, is preferably 1 to 8 hours, but is not limited thereto. It is more preferably 2 to 4 hours.

<Uses of electrically conductive material>

The electrically conductive material of the present invention can form electrically conductive paths with a smaller amount of noble metal than usual, and can form an electrode without using carbon, eliminating the problem of corrosion degradation of carbon due to high potential. Thus, the electrically conductive material of the present invention is useful for electrodes and the like of fuel cells such as polymer electrolyte fuel cells, water electrolysis cells, solar cells, transistors, and display devices such as liquid crystal display panels.

The electrically conductive material of the present invention is also useful as an electrically conductive material used for antistatic materials, heat ray shielding materials, and the like.

More preferably, the electrically conductive material of the present invention is used for an electrode material for polymer electrolyte fuel cells.

The present invention also encompasses an electrode material containing the electrically conductive material.

In the electrode material, preferably, the electrically conductive material supports or is mixed with at least one of a noble metal or a noble metal-containing compound, the noble metal containing at least one selected from platinum, iridium, and ruthenium, the noble metal-containing compound containing at least one selected from platinum, iridium, and ruthenium.

The noble metal-containing compound may be any one containing at least one noble metal element selected from platinum, iridium, and ruthenium. Examples include inorganic salts such as crystalline oxides, amorphous oxides, hydroxides, sulfates, nitrates, chlorides, and phosphates; organic salts such as acetates and oxalates; and complex salts such as dinitrodiammine nitrates. Preferred among these are oxides and hydroxides, with oxides being more preferred.

When the electrode material of the present invention contains platinum metal, iridium metal, or ruthenium metal, such metals may be supported on the electrically conductive material by using dispersions of nano-sized particles of these metals, for example. The noble metal and/or noble metal-containing compound particles may be physically mixed with the electrically conductive material.

The electrode material may support or may be mixed with any amount of the at least one of a noble metal or a noble metal-containing compound, the noble metal containing at least one selected from platinum, iridium, and ruthenium, the noble metal-containing compound containing at least one selected from platinum, iridium, and ruthenium. The amount is preferably 1 to 50 mass% in terms of platinum, iridium, or ruthenium element based on 100 mass% of the electrode material. The amount is more preferably 5 to 30 mass%, still more preferably 10 to 20 mass%.

The electrode material is preferably used for fuel cells.

The electrode material is preferably used for water electrolysis cells.

The present invention also encompasses an electrode containing the electrically conductive material of the present invention.

The electrode of the present invention can be obtained by forming an electrode material containing the electrically conductive material of the present invention on a current collector.

The current collector may be made of carbon, titanium, gold, aluminum, copper, stainless steel, or the like. Such current collectors may be coated with a noble metal or carbon.

The electrode may contain the electrically conductive material of the present invention and an optional different component other than platinum and/or a platinum-containing compound.

Examples of the different component include conductive aids and binders.

Examples of the conductive aids include acetylene black and ketjen black. Since the electrically conductive material of the present invention has excellent conductivity, excellent battery performance can be achieved without using a carbon-containing conductive aid which causes corrosion due to high potential.

Examples of the binders include polytetrafluoroethylene, polyvinylidene fluoride, and perfluoroalkylsulfonic acid polymers.

The present invention also encompasses a water electrolysis cell containing the electrically conductive material of the present invention.

The present invention is also a fuel cell including the electrode of the present invention.

The electrode of the present invention is suitable for fuel cells. In particular, the electrode is suitable as an electrode for polymer electrolyte fuel cells (PEFCs). In particular, the electrode is useful as an alternative to a commonly used carbon-supported platinum electrode. The electrode is suitable for both a cathode and an anode.

The present invention also encompasses a water electrolysis cell including the electrode of the present invention.

The electrode of the present invention is suitable for water electrolysis cells. In particular, it is suitable as an electrode for a polymer electrolyte water electrolysis cell. In particular, it is useful as an alternative to a commonly used iridium electrode. The electrode is suitable for both a cathode and an anode.

EXAMPLES

The present invention is described in more detail below with reference to examples, but the present invention is not limited to these examples.

<Evaluation of physical properties>

The physical properties and the like of powders obtained were evaluated by the following procedures.

1. BET specific surface area

In accordance with JIS Z 8830 (2013), samples were heated at 200°C for 60 minutes in a nitrogen atmosphere, and then the specific surface area thereof was measured using a specific surface area meter (trade name: "Macsorb HM-1220" available from Mountech Co., Ltd.).

2. Measurement of amount of iridium element by XPS

<X-ray photoelectron spectroscopy (XPS) in the case of containing no ruthenium>

The spectra of titanium 2p and iridium 4f were measured using a PHI5700 ESCA system available from Physical Electronics as an X-ray photoelectron spectrometer. A monochromatic Al K$\alpha$ x-ray was used as the X-ray source, and the spot size was set to 800 um as a measurement condition. For the obtained XPS spectra, the atomic concentrations of titanium and iridium were calculated using the same system. All binding energies were charge-corrected to the C1S binding energy of the surface-contaminated hydrocarbon as 284.8 eV.

<X-ray photoelectron spectroscopy (XPS) in the case of containing ruthenium>

In the case of containing ruthenium, the peak positions of titanium 2p1 and ruthenium 3P3 overlap. Thus, the spectra of titanium 2p3, iridium 4f, and ruthenium 3d5 were measured.

Excepting this, measurement was performed as in the above procedure so that each of the atomic concentrations of three elements, titanium, iridium, and ruthenium, on the surface were calculated based on the total 100% of the three elements, and the percentage of iridium based on the total 100% of the titanium element and the iridium element was calculated.

3. Measurement of amount of iridium element by X-ray fluorescence (XRF)

The amounts of titanium and iridium were determined using a scanning X-ray fluorescence spectrometer ZSX Primus II (Rigaku Corporation).

4. X-ray diffraction

Measurement was performed using an X-ray diffractometer (RINT-TTR3, available from Rigaku) under the following conditions.

Optical system: parallel beam optical system (long slit:

PSA200/resolution: 0.057°)

Tube voltage: 50 kV
Current: 300 mA
Measurement method: continuous scan
Measurement range (2θ): 10° to 70°
Sampling interval: 0.04°
Scan speed: 5°/min

The percentage of the sub-phase(s) relative to the rutile crystalline phase is expressed by the following formula.

```
[Sum of intensities of strongest peaks of sub-
phases/(Intensity of strongest peak of rutile crystalline
phase + Sum of intensities of strongest peaks of sub-
phases)] × 100 (%)
```

Here, the intensity of the strongest peak of the rutile crystalline phase is the peak intensity at 27.4 ± 2° of 2θ. When a sub-phase(s) is present such as a Na-Ti-O, K-Ti-O, Rb-Ti-O, or Cs-Ti-O ternary phase or a phase other than the rutile crystalline phase, the "sum of intensities of strongest peaks of sub-phases" refers to the sum of the peak of the anatase crystalline phase at 25.3 ± 2° and the intensity(s) of the strongest peak(s) of these sub-phase (s) .

5. Volume resistance

The volume resistance was measured using a powder resistance measurement system MCP-PD51 available from Mitsubishi Chemical Analytech Co., Ltd. The powder resistance measurement system includes a hydraulic powder pressing unit, a four-point probe, and a high resistivity meter (Loresta-GX MCP-T700 available from the same company).
The value of the volume resistance (Ω·cm) was determined by the following procedure.

1) A powder sample was put in a press member (diameter: 20 mm) equipped with a four-point probe at the bottom surface, and the press member was set in a pressure unit of the powder resistance measurement system.
2) After pressurizing the powder pressing unit to 20 kN, the powder thickness was measured with a digital caliper, and the resistance was measured with a high resistance measuring device.
3) The volume resistivity (Ω·cm) was determined by the following equation using the powder thickness and resistance.

```
(Volume resistivity) = (Resistance) × (Resistivity
correction factor) × (Thickness)
```

6. Electron micrograph observation

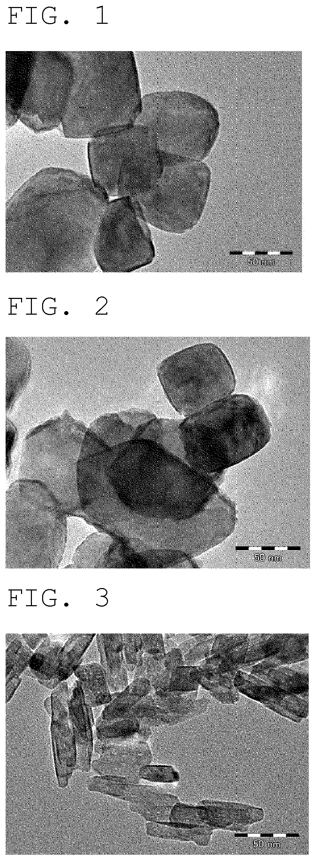

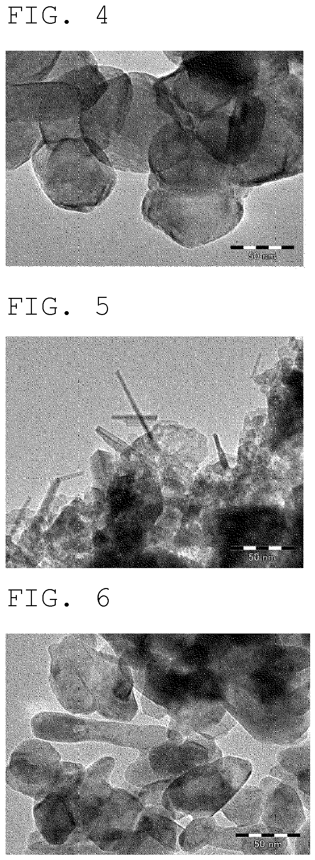

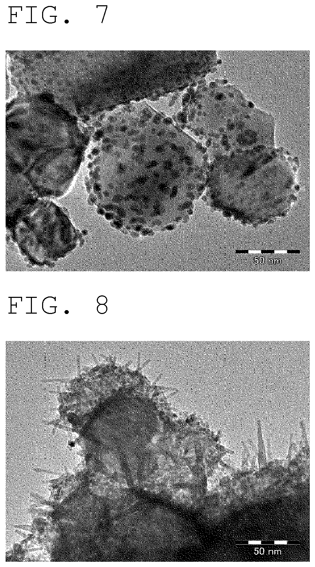

A field emission transmission electron microscope "JEM-2100F" (JEOL Ltd.) was used for observation. The results are shown in FIGS. 1 to 8.

7. Membrane electrode assembly, Fuel cell power generation test

Initial power generation test

A membrane electrode assembly was incorporated in a single cell (Miclab, electrode area 1 cm × 1 cm, Cu separator with 10 um-thick Au plating, straight flow channel design) such that the catalyst layer containing the powder obtained in any of the examples and comparative examples serves as the anode and the carbon-supported Pt catalyst layer (the platinum basis weight 0.2 mgPt/cm$^2$) serves as the cathode. The test was performed using a PEFC single cell evaluation device (Toyo Technica) with the following settings: the cell temperature 80°C; the temperature 75°C, humidification 100% H$_2$ at 500 ml/min, on the anode side; and the temperature 75°C, humidification 100% O$_2$ at 500 ml/min, on the cathode side. The voltage was swept from open-circuit voltage to 0.2 V, and the voltage and cell resistance at each of 0.5 A/cm$^2$ and 1.0 A/cm$^2$ were measured.

8. Post-high-potential-holding power generation test

After performing the initial power generation test, the single cell was reversed, and the settings are configured as follows: the cell temperature 80°C; the temperature 75°C, humidification 100% $H_2$ at 500 ml/min, on the anode side; and the temperature 75°C, humidification 100% $N_2$ 500 ml/min, on the cathode side. A voltage of 1.7 V was applied for 10 minutes, the single cell was reversed, and the power generation test was performed again to measure the voltage at 0.5 A/cm$^2$.

Pre- and post-high-potential-holding voltage retention rates were calculated based on the following formula, with the value of Comparative Example 5 being set to 100.

```
{(Pre- and post-high-potential-holding voltages in each of
the examples at 1 A/cm²) ÷ (Initial voltage in the example
at 1 A/cm²)} ÷ {(Pre-and post-high-potential-holding
voltages in Comparative Example 5 at 1 A/cm²) ÷ (Initial
voltage in Comparative Example 5 at 1 A/cm²)} × 100
```

9. Membrane electrode assembly, Water electrolysis test

A membrane electrode assembly was incorporated in a single cell (Miclab, electrode area 1 cm × 1 cm, Cu separator with 10 um-thick Au plating, straight flow channel design) such that the catalyst layer containing the powder obtained in any of the examples and comparative examples serves as the anode and the carbon-supported Pt electrode (the platinum basis weight 0.2 mgPt/cm$^2$) serves as the cathode. The test was performed using a PEFC single cell evaluation device (Toyo Technica) with the following settings: the cell temperature 70°C; the temperature 80°C, humidification 4% $H_2/N_2$ at 1 L /min, on the anode side; and the temperature 80°C, humidification 100% $N_2$ at 1 L/min, on the cathode side. The voltage was swept from 1.0 V to 2.0 V, and the current density at 1.5 V was measured.

<Preparation of electrically conductive material, electrode material, and electrode>

(Example 1)

Preparation of electrically conductive material

First, 10.0 g of rutile titanium oxide (Sakai Chemical Industry Co., Ltd., product name "STR100N", BET specific surface area 100 m$^2$/g) placed in an alumina crucible was heated to 850°C over 4 hours and 15 minutes and allowed to stand at 850°C for 4 hours in an electric furnace, followed by natural cooling to room temperature.

Then, a beaker was charged with 3.0 g of the resulting rutile titanium oxide product fired at 850°C and 480 ml of ion-exchange water, followed by mixing and stirring to give a $TiO_2$ slurry 1.

Separately, to a beaker containing 27.1 g of a 1.2 wt% Ir solution prepared by diluting an aqueous solution of iridium chloride hydrochloride (8.6 wt% in terms of Ir, available from Tanaka Kikinzoku Kogyo K.K.) was added 0.09 g of hydrazine chloride. The contents were stirred with a magnetic stirrer. The resulting solution was referred to as a "mixed Ir aqueous solution 1".

The mixed Ir aqueous solution 1 was added to the $TiO_2$ slurry 1 under stirring. Then, the liquid was mixed and stirred while the liquid was heated and allowed to stand at 70°C. To the mixture was added dropwise a 1.0 mol/L sodium hydroxide aqueous solution to adjust the pH of the mixture to 7. Then, the liquid was heated and allowed to stand at 70°C for 4 hours, followed by filtering, washing with water, and drying to evaporate all the moisture by the usual methods. The entire amount of the resulting powder was placed in an alumina boat and heated to 450°C over 135 minutes and allowed to stand at 450°C for 4 hours in an electric furnace, followed by natural cooling to room temperature to give a $IrO_2$-loaded $TiO_2$ powder 1 (electrically conductive material 1).

Preparation of electrode material

A four-necked flask was charged with 3.0 g of the resulting $IrO_2$-loaded $TiO_2$ powder 1, 960 ml of ion-exchange water, and 240 ml of ethanol. The contents were mixed and stirred to give a $IrO_2$-loaded $TiO_2$ slurry 1.

The $IrO_2$-loaded $TiO_2$ slurry 1 was heated in an oil bath for 30 minutes with stirring under reflux with a reflux condenser. To the resulting solution was added 15.2 g of a 2.2 wt% Pt liquid prepared by diluting a chloroplatinic acid solution (15.3 wt% in terms of Pt, available from Tanaka Kikinzoku Kogyo K.K.). The solution was mixed and stirred for one hour while the solution was heated and allowed to stand under reflux. The resulting substance was filtered, washed with water, and dried to evaporate all the moisture by the usual methods to give a Pt and $IrO_2$-loaded $TiO_2$ powder 1 (electrode material 1).

Fabrication of electrode (membrane electrode assembly)

A screw-cap tube was charged with 0.2 g of the resulting Pt and $IrO_2$-loaded $TiO_2$ powder 1, 168 pl of a 20 wt% Nafion solution (Sigma-Aldrich), 120 ul of t-butyl alcohol (Wako Pure Chemical Industries, Ltd.), 24 pl of ion-exchange water, and 1.4 g of 2 mmφ $ZrO_2$ beads. The contents were dispersed with an ultrasonic cleaner for 150 minutes to give a Pt and $IrO_2$-loaded $TiO_2$ ink 1. The resulting Pt and $IrO_2$-loaded $TiO_2$ ink 1 in an amount of 40 pl was dropped on a Teflon (registered trademark) sheet, applied with a bar coater, and then naturally dried to give a sheet 1 of Pt and $IrO_2$-loaded $TiO_2$ powder 1 (the amount of Pt used was 0.05 mgPt/cm$^2$).

A screw-cap tube was charged with 0.02 g of a commercially available 50 wt% carbon-supported Pt (N.E. Chemcat), 61 pl of a 20 wt% Nafion solution (Sigma Aldrich), 179 pl of t-butyl alcohol (Wako Pure Chemical Co., Ltd.), 89 pl of ion-exchange water, and 1.6 g of 2 mmφ $ZrO_2$ beads. The contents were dispersed with an ultrasonic cleaner for 150 minutes to give a Pt-loaded carbon ink 1.

The obtained Pt-loaded carbon ink 1 in an amount of 40 pl was dropped on a Teflon (registered trademark) sheet, applied with a bar coater, and then naturally dried to give a Pt-loaded carbon sheet 1 (the amount of Pt used was 0.2 mgPt/cm$^2$) .

An electrolyte membrane (DuPont, product name NR-212) was cut into a 3 cm × 3 cm piece, and the Pt and $IrO_2$-loaded $TiO_2$ sheet 1 and the Pt-loaded carbon sheet 1 were each cut into a 1 cm × 1 cm piece. The Pt and $IrO_2$-loaded $TiO_2$ sheet 1, the electrolyte membrane, and the Pt-loaded carbon sheet 1 were stacked in this order, and pressed with heating using a heated hydraulic press (Toyo Seiki Seisakusho, product name: Mini Test Press MP-WNH) at 140°C for six minutes with a pressure being set at 1 MPa. Thereafter, the Teflon (registered trademark) sheets were removed from the Pt and $IrO_2$-loaded $TiO_2$ sheet 1 and the Pt-loaded carbon sheet 1 to give a membrane electrode assembly 1.

(Example 2)

A $IrO_2$-loaded $TiO_2$ powder 2 (electrically conductive material 2), a Pt and $IrO_2$-loaded $TiO_2$ powder 2 (electrode material 2), and a membrane electrode assembly 2 were produced as in Example 1, except that rutile titanium oxide was heated to 900°C over 4.5 hours and allowed to stand at 900°C for 4 hours in an electric furnace, and the amounts of Ir and Pt supported were each changed to 20%.

(Example 3)

A $IrO_2$-loaded $TiO_2$ powder 3 (electrically conductive material 3), a Pt and $IrO_2$-loaded $TiO_2$ powder 3 (electrode material 3), and a membrane electrode assembly 3 were produced as in Example 1, except that rutile titanium oxide was heated to 500°C over 2.5 hours and allowed to stand at 500°C for 4 hours in an electric furnace, and the amounts of Ir and Pt supported were each changed to 20%.

(Example 4)

A $IrO_2$-loaded $TiO_2$ powder 4 (electrically conductive material 4) was prepared as in Example 2, except that the amount of Ir supported was changed to 15%.

A four-necked flask was charged with 3.0 g of the resulting electrically conductive material 4 and 1200 ml of ion-exchange water. The contents were mixed and stirred to give a slurry of electrically conductive material 4.

To the slurry of electrically conductive material 4 were added 68.2 g of a 2.2 wt% Ru solution prepared by diluting an aqueous solution of ruthenium chloride hydrochloride (8.369 parts by weight in terms of Ru, available from Tanaka Kikinzoku Kogyo K.K.) with ion-exchange water and 40.7 g of a 1.23 wt% Ir solution prepared by diluting an aqueous solution of iridium chloride hydrochloride (8.589 wt% in terms of Ir, available from Tanaka Kikinzoku Kogyo K.K.). The contents were stirred at room temperature for 18 hours.

Separately, 18.1 g of sodium hydroxide (first grade, available from FUJIFILM Wako Pure Chemical Corporation Industries, Ltd.) and 3.88 g of sodium borohydride (first grade, available from FUJIFILM Wako Pure Chemical Corporation, Ltd.) were dissolved in and diluted with ion-exchange water to prepare 100 ml of a stabilized sodium borohydride solution. The stabilized sodium borohydride solution was added dropwise to the slurry of electrically conductive material 4 which had been prepared by adding and stirring the Ru solution and the Ir solution, followed by stirring for one hour. The resulting mixture was filtered, washed with water, and dried to evaporate all the moisture by the usual methods to give a Ru, Ir, and $IrO_2$-loaded $TiO_2$ powder 1 (electrode material 4). A sheet 1 of Ru, Ir, and $IrO_2$-loaded $TiO_2$ powder 1 (total amount of Ir used: 0.1 $mgIr/cm^2$) was obtained as in Example 1. The resulting sheet, an electrolyte membrane, and the Pt-loaded carbon sheet 1 were stacked in this order as in Example 1 to fabricate a membrane electrode assembly 4.

(Example 5)

Preparation of electrically conductive material

To a beaker containing 15.2 g of a 1.23 wt% Ir solution was added 0.05 g of hydrazine chloride. The contents were stirred with a magnetic stirrer. The resulting solution was referred to as a "mixed Ir aqueous solution 2".
Separately, to a beaker containing 25.6 g of a 2.2 wt% Ru solution prepared by diluting an aqueous solution of ruthenium chloride hydrochloride (8.4 wt% in terms of Ru, available from Tanaka Kikinzoku Kogyo K.K.) was added 0.3 g of hydrazine chloride. The contents were stirred with a magnetic stirrer. The resulting solution was referred to as a "mixed Ru aqueous solution 1".
The mixed Ir aqueous solution 2 and the mixed Ru aqueous solution 1 were added to the $TiO_2$ slurry 1 prepared as in Example 1 under stirring. Then, the liquid was mixed and stirred while the liquid was heated and allowed to stand at 70°C. To the mixture was added dropwise a 1.0 mol/L sodium hydroxide aqueous solution to adjust the pH of the mixture to 7. The liquid was heated and allowed to stand at 70°C for 4 hours, followed by filtering, washing with water, and drying to evaporate all the moisture by the usual methods. The entire amount of the resulting powder was placed in an alumina boat and heated to 450°C over 135 minutes and allowed to stand at 450°C for 4 hours in an electric furnace, followed by natural cooling to room temperature to give a $IrO_2$ and $RuO_2$-loaded $TiO_2$ powder 1 (electrically conductive material 5).
As in Example 2, 20 wt% of Pt was supported on the electrically conductive material 5 to prepare a Pt, $IrO_2$, and $RuO_2$-loaded $TiO_2$ powder 1 (electrode material 5).
A sheet 1 of Pt, $IrO_2$, and $RuO_2$-loaded $TiO_2$ powder 1 (the amount of Pt used: 0.05 $mgPt/cm^2$) was obtained as in Example 1. The resulting sheet, an electrolyte membrane, and the Pt-loaded carbon sheet 1 were stacked in this order as in Example 1 to fabricate a membrane electrode assembly 5.

(Example 6)

A $IrO_2$ and $RuO_2$-loaded $TiO_2$ powder 2 (electrically conductive material 6) was obtained as in Example 5, except that the amount of Ir supported was changed to 3% and the amount of Ru supported was changed to 17%. As in Example 2, 20 wt% of Pt was supported on the electrically conductive material 6 to prepare a Pt, $IrO_2$, and $RuO_2$-loaded $TiO_2$ powder 2 (electrode material 6).
A sheet 1 of Pt, $IrO_2$, and $RuO_2$-loaded $TiO_2$ powder 2 (the amount of Pt used: 0.05 $mgPt/cm^2$) was obtained as in Example 1. The resulting sheet, an electrolyte membrane, and the Pt-loaded carbon sheet 1 were stacked in this order as in Example 1 to fabricate a membrane electrode assembly 6.

(Example 7)

A beaker was charged with 3.0 g of the electrically conductive material 4 and 480 ml of ion-exchange water, followed by mixing and stirring to give a slurry of electrically conductive material 4.
A mixed Ir aqueous solution 1 prepared as in Example 1 was added to the slurry of electrically conductive material 4 under stirring. Then, the liquid was mixed and stirred while the liquid was heated and allowed to stand at 70°C. To the mixture was added dropwise a 1.0 mol/L sodium hydroxide aqueous solution to adjust the pH of the mixture to 7. The liquid was heated and allowed to stand at 70°C for 4 hours, followed by filtering, washing with water, and drying to evaporate all the moisture by the usual methods. The entire amount of the resulting powder was placed in an alumina boat and heated to 300°C over 90 minutes and allowed to stand at 300°C for 4 hours in an electric furnace, followed by natural cooling to room temperature to give a IrOx ($0 < X \le 2$) and $IrO_2$-loaded $TiO_2$ powder 1 (electrode material 7).
A sheet 1 of IrOx and $IrO_2$-loaded $TiO_2$ powder 1 (the amount of Ir used: 0.1 $mgIr/cm^2$) was obtained as in Example 1. The resulting sheet, an electrolyte membrane, and the Pt-loaded carbon sheet 1 were stacked in this order as in Example 1 to fabricate a membrane electrode assembly 7.

(Example 8)

To a beaker containing 104.5 g of a 1.2 wt% Ir solution prepared by diluting an aqueous solution of iridium chloride hydrochloride (8.6 wt% in terms of Ir, available from Tanaka Kikinzoku Kogyo K.K.) was added 0.35 g of hydrazine chloride. The contents were stirred with a magnetic stirrer. The resulting solution was referred to as a "mixed Ir aqueous solution 3".

The mixed Ir aqueous solution 3 was added to a $TiO_2$ slurry 1 prepared as in Example 1 under stirring. Then, the liquid was mixed and stirred while the liquid was heated and allowed to stand at 70°C. To the mixture was added dropwise a 1.0 mol/L sodium hydroxide aqueous solution to adjust the pH of the mixture to 7. The liquid was heated and allowed to stand at 70°C for 4 hours, followed by filtering, washing with water, and drying to evaporate all the moisture by the usual methods. The entire amount of the resulting powder was placed in an alumina boat and heated to 300°C over 90 minutes and allowed to stand at 300°C for 4 hours in an electric furnace, followed by natural cooling to room temperature to give a IrOx-loaded $TiO_2$ powder 1 (electrically conductive material 7).

A sheet 1 of IrOx-loaded $TiO_2$ powder 1 (the amount of Ir used: 0.1 mgIr/cm$^2$) was obtained as in Example 1, except that the electrically conductive material 7 was replaced by an electrode material 8. The resulting sheet, an electrolyte membrane, and the Pt-loaded carbon sheet 1 were stacked in this order as in Example 1 to fabricate a membrane electrode assembly 8.

(Example 9)

A $IrO_2$-loaded $TiO_2$ powder 5 (electrically conductive material 8) was produced as in Example 2, except that rutile titanium oxide was heated to 950°C over 4 hours and 45 minutes and allowed to stand at 950°C for 4 hours in an electric furnace, and the amount of Ir supported was changed to 5%.

As in Example 2, 20 wt% of Pt was supported on the electrically conductive material 8 to prepare a Pt and $IrO_2$-loaded $TiO_2$ powder 4 (electrode material 9).

A sheet 1 of Pt and $IrO_2$-loaded $TiO_2$ powder 4 (the amount of Pt used: 0.05 mgPt/cm$^2$) was obtained as in Example 1. The resulting sheet, an electrolyte membrane, and the Pt-loaded carbon sheet 1 were stacked in this order as in Example 1 to fabricate a membrane electrode assembly 9.

(Example 10)

A sheet 1 of Pt, $IrO_2$, and $RuO_2$-loaded $TiO_2$ powder 1 (the amount of Pt used: 0.05 mgPt/cm$^2$) was prepared as in Example 5. A sheet 2 of Pt, $IrO_2$, and $RuO_2$-loaded $TiO_2$ powder 1 (the amount of Pt used: 0.2 mgPt/cm$^2$) was prepared by changing the weight of Pt in the sheet 1. The sheet 1 of Pt, $IrO_2$, and $RuO_2$-loaded $TiO_2$ powder 1, an electrolyte membrane, and the sheet 2 of Pt, $IrO_2$, and $RuO_2$-loaded $TiO_2$ powder 1 were stacked in this order to fabricate a membrane electrode assembly 10.

(Example 11)

The electrically conductive material 2 and iridium black (Alfa Aesar) were physically mixed in a weight ratio of 62.5:37.5 to give an electrode material 10. An Ir-mixed, $IrO_2$-loaded $TiO_2$ sheet 1 (the amount of Ir used: 0.1 mgIr/cm$^2$) was obtained as in Example 1. The resulting sheet, an electrolyte membrane, and the Pt-loaded carbon sheet 1 were stacked in this order as in Example 1 to fabricate a membrane electrode assembly 11.

(Example 12)

The electrically conductive material 2 and IrOx (Tanaka Kikinzoku Co., Ltd.) were physically mixed in a weight ratio of 62.5:37.5 to give an electrode material 11. A IrOx-mixed, $IrO_2$-loaded $TiO_2$ sheet 1 (the amount of Ir used: 0.1 mgIr/cm$^2$) was obtained as in Example 1. The resulting sheet, an electrolyte membrane, and the Pt-loaded carbon sheet 1 were stacked in this order as in Example 1 to fabricate a membrane electrode assembly 12.

(Comparative Example 1)

A comparative electrically conductive material 1, a comparative electrode material 1, and a comparative membrane electrode assembly 1 were produced as in Example 1, except that non-fired anatase titanium oxide ("SSP-N" available from Sakai Chemical Industry Co., Ltd., BET: 270 m$^2$/g) was used as titanium oxide and that the amounts of Ir and Pt supported were each changed to 20%.

(Comparative Example 2)

A comparative electrically conductive material 2, a comparative electrode material 2, and a comparative membrane electrode assembly 2 were produced as in Example 1, except that 20 wt% of Ir was supported on non-fired rutile titanium oxide and then the workpiece was fired at 800°C, and that the amount of Pt supported was changed to 20%.

(Comparative Example 3)

A comparative electrically conductive material 3, a comparative electrode material 3, and a comparative membrane electrode assembly 3 were produced as in Example 1, except that 30% of Ir was supported on a product prepared by firing rutile titanium oxide at 850°C, the resulting workpiece was fired in 100% hydrogen at 900°C, and 15 wt% of Pt was supported thereon.

(Comparative Example 4)

A comparative electrically conductive material 4, a comparative electrode material 4, and a comparative membrane electrode assembly 4 were produced as in Example 2 except that anatase titanium oxide was used.
The electrically conductive materials and membrane electrode assemblies obtained in Examples 1 to 9 and Comparative Examples 1 to 4 were subjected to volume resistance measurement. The results are shown in Table 1. Also, a fuel cell power generation test was performed. The results are shown in Table 2.

[Table 1]

| | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 |
|---|---|---|---|---|---|---|---|---|---|---|---|---|---|---|
| Raw material $TiO_2$ | $TiO_2$ crystal phase | Rutile | Rutile | Rutile | Rutile | Rutile | Rutile | Rutile | Rutile | Rutile | Anatase | Rutile | Rutile | Anatase |
| | BET specific surface area ($m^2$/g) of $TiO_2$ | 20 | 16 | 45 | 16 | 16 | 16 | 16 | 16 | 11 | 270 | 100 | 20 | 30 |

(continued)

| | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 |
|---|---|---|---|---|---|---|---|---|---|---|---|---|---|---|
| Electrically conductive material | Percentage of total Ir (mass%)[*1] | 10 | 20 | 20 | 15 | 5 | 3 | 15 | 20 | 5 | 20 | 20 | 30 | 20 |
| | Percentage of total Ru (mass%)[*2] | 0 | 0 | 0 | 0 | 15 | 17 | 0 | 0 | 0 | 0 | 0 | 0 | 0 |
| | Atmosphere and temperature on fixation | Air 450°C | Air 450°C | Air 450°C | Air 450°C | Air 450°C | Air 450°C | Air 450°C | Air 300°C | Air 450°C | Air 450°C | Air 800°C | $H_2$ 900°C | Air 450°C |
| | State of Ir | Oxide (Crystal) | Oxide (Crystal) | Oxide (Crystal) | Oxide (Crystal) | Oxide (Crystal) | Oxide (Crystal) | Oxide (Crystal) | Oxide (Amorphous) | Oxide (Crystal) | Oxide (Crystal) | Oxide (Crystal) | Metal | Oxide (Crystal) |
| | Crystal phase of $TIO_2$ | Rutile | Rutile | Rutile | Rutile | Rutile | Rutile | Rutile | Rutile | Rutile | Anatase | Rutile | Rutile | Anatase |
| | BET specific surface area (m²/g) | 15 | 16 | 40 | 16 | 16 | 17 | 16 | 20 | 11 | 72 | 16 | 16 | 31 |
| | Percentage of Ir (at %) by XPS | 75 | 92 | 55 | 82 | 43 | 32 | 82 | 83 | 37 | 35 | 27 | 66 | 96 |
| | Volume resistance value ($\Omega \cdot cm$) | 9.70E-02 | 4.10E-02 | 3.00E-01 | 5.34E-02 | 3.14E-02 | 1.61E-02 | 5.34E-02 | 1.6.E+00 | 5.4.E-01 | 1.50E+05 | 4.50E+02 | 1.80E+02 | 3.30E-01 |

(continued)

| Electrode material | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 |
|---|---|---|---|---|---|---|---|---|---|---|---|---|---|---|
| | Ctalyst species | Pt | Pt | Pt | Ir, Ru | Pt | Pt | Ir | - | Pt | Pt | Pt | Pt | Pt |
| | Amount of catalyst (wt%) | 10 | 20 | 20 | 10 (Ir) 30 (Ru) | 20 | 20 | 10 | - | 20 | 20 | 20 | 15 | 20 |

*1: Percentage of the total iridium element based on the total 100 mass% of the titanium oxide and iridium in the electrically conductive material
*2: Percentage of the ruthenium element based on the total 100 mass% of the titanium oxide and iridium in the electrically conductive material

[Table 2]

| | Example 1 | Example 2 | Example 3 | Example 4 | Example 5 | Example 6 | Example 9 | Example 10 | Comparative Example 1 | Comparative Example 2 | Comparative Example 3 | Comparative Example 4 |
|---|---|---|---|---|---|---|---|---|---|---|---|---|
| Initial voltage [V] at 0.5 A/cm² | 0.69 | 0.71 | 0.64 | 0.71 | 0.75 | 0.75 | 0.74 | 0.75 | No generation of electricity | 0.003 | 0.62 | 0.55 |
| Initial voltage [V] at 1.0 A/cm² | 0.49 | 0.6 | 0.44 | 0.59 | 0.65 | 0.64 | 0.63 | 0.65 | No generation of electricity | No generation of electricity | 0.21 | No generation of electricity |

(Volume resistance measurement)

As shown in Table 1, the volume resistance values of Examples 1 to 9 are lower than that of Comparative Example 3, confirming that the presence of iridium oxide on titanium oxide is effective for electrically conductive materials.
Also, the volume resistance values of Examples 1 to 9 are lower than that of Comparative Example 2, confirming that it is effective for electrically conductive materials that the percentage of the iridium element as measured by XPS is 30 at% or more based on the total 100 at% of the titanium element and the iridium element. Also, the volume resistance values of Examples 1 to 9 are lower than those of Comparative Examples 1 and 4, confirming that it is effective that rutile titanium oxide is used as titanium oxide.

(Fuel cell power generation test)

As shown in Table 2, the initial voltages of Examples 1 to 6, 9, and 10 are higher than that of Comparative Example 3, confirming that the presence of iridium oxide on titanium oxide is effective for fuel cell electrodes.
Also, the voltages of Examples 1 to 6, 9, and 10 are higher than that of Comparative Example 2, confirming that it is effective that the percentage of the iridium element as measured by XPS is 30 at% or more based on the total 100 at% of the titanium element and the iridium element. Also, the voltages of Examples 1 to 6, 9, and 10 are higher than those of Comparative Examples 1 and 4, confirming that it is effective that rutile titanium oxide is used as titanium oxide.

(Comparative Example 5)

A Pt-loaded carbon sheet 2 was obtained as in Example 1, except that the amount of Pt used in the Pt-loaded carbon sheet 1 was changed to 0.05 $mgPt/cm^2$. The resulting sheet, an electrolyte membrane, and the Pt-loaded carbon sheet 1 were stacked in this order as in Example 1 to fabricate a comparative membrane electrode assembly 5.

(Test of high-potential durability)

The membrane electrode assemblies obtained in Example 2 and Comparative Example 5 were subjected to a post-high-potential-holding power generation test.
The durability in Example 2 is 112% of the durability in Comparative Example 5 in which Pt/C, which is commonly used as an electrode material for fuel cells, is also used for the anode, confirming the high durability against high potential in Example 2.

(Comparative Example 6)

A comparative membrane electrode assembly 6 was produced as in Example 11, except that iridium black (Alfa Aesar) was used instead of the electrode material 10 of Example 11.

(Water electrolysis test)

Water electrolysis tests were conducted using the membrane electrode assemblies obtained in Examples 4, 7, 8, 11, and 12 and Comparative Example 6. The results are shown in Table 3.

[Table 3]

| | Example 4 | Example 7 | Example 8 | Example 11 | Example 12 | Comparative Example 6 |
|---|---|---|---|---|---|---|
| Current density [mA/cm$^2$] at 1.5 V | 571 | 630 | 589 | 501 | 647 | 388 |

As shown in Table 3, the current densities in Examples 4, 7, 8, 11, and 12 are higher than that in Comparative Example 6 in which iridium black, which is an iridium metal commonly used as an electrode material for water electrolysis cells, was used. Ir can be used more efficiently in the case where a mixture of iridium, iridium oxide, and ruthenium is supported on or mixed with an electrically conductive material in which iridium oxide is present on rutile titanium oxide, compared to the case where iridium metal alone is used. Such electrodes for water electrolysis can exhibit higher water electrolysis performance.

**Claims**

1. An electrically conductive material comprising:

   rutile titanium oxide; and
   iridium oxide on the rutile titanium oxide;
   a percentage of a total iridium element in the electrically conductive material being 30 mass% or less based on a total 100 mass% of the titanium oxide and the iridium,
   a percentage of the iridium element as measured by XPS being 30 at% or more based on a total 100 at% of the titanium element and the iridium element.

2. The electrically conductive material according to claim 1,
   wherein the rutile titanium oxide has a BET specific surface area of less than 50 $m^2$/g.

3. An electrode material comprising the electrically conductive material according to claim 1 or 2.

4. An electrode material comprising the electrically conductive material according to claim 1 or 2;
   the electrically conductive material supporting or being mixed with at least one of a noble metal or a noble metal-containing compound, the noble metal comprising at least one selected from platinum, iridium, and ruthenium, the noble metal-containing compound comprising at least one selected from platinum, iridium, and ruthenium.

5. The electrode material according to claim 3 or 4,
   wherein the electrode material is for use in a fuel cell.

6. The electrode material according to claim 3 or 4,
   wherein the electrode material is for use in a water electrolysis cell.

7. An electrode comprising the electrode material according to any one of claims 3 to 6.

8. A fuel cell comprising the electrode according to claim 7.

9. A water electrolysis cell comprising the electrode according to claim 7.

10. A method of producing the electrically conductive material according to claim 1 or 2, the method comprising supporting iridium oxide on rutile titanium oxide.

FIG. 1

FIG. 2

FIG. 3

FIG. 4

FIG. 5

FIG. 6

FIG. 7

FIG. 8

## INTERNATIONAL SEARCH REPORT

| International application No. |
|---|
| **PCT/JP2022/015404** |

**A. CLASSIFICATION OF SUBJECT MATTER**

*C01G 23/047*(2006.01)i; *H01M 4/86*(2006.01)i; *H01B 1/02*(2006.01)i; *H01M 8/10*(2016.01)i; *C25B 11/067*(2021.01)i; *C25B 11/081*(2021.01)i; *C25B 9/00*(2021.01)i; *C25B 1/04*(2021.01)i
FI: C25B11/067; H01M4/86 B; C25B11/081; C25B1/04; C25B9/00 A; C01G23/047; H01M8/10 101; H01B1/02 Z

According to International Patent Classification (IPC) or to both national classification and IPC

**B. FIELDS SEARCHED**

Minimum documentation searched (classification system followed by classification symbols)

C01G23/047; H01M4/86; H01B1/02; H01M8/10; C25B11/067; C25B11/081; C25B9/00; C25B1/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 6-192870 A (PERMELEC ELECTRODE LIMITED) 12 July 1994 (1994-07-12) paragraphs [0018]-[0025] | 1-3, 7, 10 |
| X | JP 2018-147569 A (SAKAI CHEM. IND. COMPANY, LIMITED) 20 September 2018 (2018-09-20) claims, paragraphs [0043], [0044], [0059]-[0085], fig. 3 | 1, 3-5, 7-8, 10 |
| Y | | 6, 9 |
| Y | JP 2007-514520 A (UMICORE AKTIENGESELLSCHAFTEN & CO. KOMMANDITGESELLSCHAFT) 07 June 2007 (2007-06-07) claims, paragraph [0001] | 6, 9 |
| A | JP 2015-502646 A (UMICORE AKTIENGESELLSCHAFTEN & CO. KOMMANDITGESELLSCHAFT) 22 January 2015 (2015-01-22) | 1-10 |
| A | JP 6375085 B1 (SHOWA DENKO KABUSHIKI KAISHA) 15 August 2018 (2018-08-15) | 1-10 |
| A | JP 2005-89779 A (WAKO SANGYO KABUSHIKI KAISHA) 07 April 2005 (2005-04-07) | 1-10 |

☑ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 June 2022** | **14 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
| --- |
| **PCT/JP2022/015404** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2003-64495 A (SANYO ELECTRIC COMPANY, LIMITED) 05 March 2003 (2003-03-05) | 1-10 |
| A | US 2011/0207602 A1 (OCEAN UNIVERSITY OF CHINA) 25 August 2011 (2011-08-25) | 1-10 |
| P, A | KR 10-2021-0034900 A (KOREA INSTITUTE OF INDUSTRIAL TECHNOLOGY) 31 March 2021 (2021-03-31) | 1-10 |

Form PCT/ISA/210 (second sheet) (January 2015)

**INTERNATIONAL SEARCH REPORT**
Information on patent family members

International application No.

**PCT/JP2022/015404**

| Patent document cited in search report | | | Publication date (day/month/year) | Patent family member(s) | | | Publication date (day/month/year) |
|---|---|---|---|---|---|---|---|
| JP | 6-192870 | A | 12 July 1994 | (Family: none) | | | |
| JP | 2018-147569 | A | 20 September 2018 | US | 2020/0058945 | A1 | |
| | | | | fig. 3, paragraphs [0076], [0077], [0096]-[0138], claims | | | |
| | | | | CN | 110383394 | A | |
| | | | | KR | 10-2019-0126058 | A | |
| | | | | TW | TW 201840047 | A | |
| JP | 2007-514520 | A | 07 June 2007 | US | 2007/0292744 | A1 | |
| | | | | paragraphs [0001], [0002], claims | | | |
| | | | | CN | 1874841 | A | |
| | | | | KR | 10-2006-0100404 | A | |
| JP | 2015-502646 | A | 22 January 2015 | US | 2014/0349203 A1 | A1 | |
| | | | | KR | 10-2014-0116056 | A | |
| JP | 6375085 | B1 | 15 August 2018 | US | 2020/0406241 | A1 | |
| | | | | CN | 110062652 | A | |
| JP | 2005-89779 | A | 07 April 2005 | (Family: none) | | | |
| JP | 2003-64495 | A | 05 March 2003 | (Family: none) | | | |
| US | 2011/0207602 | A1 | 25 August 2011 | WO | 2008/040222 | A1 | |
| KR | 10-2021-0034900 | A | 31 March 2021 | (Family: none) | | | |

Form PCT/ISA/210 (patent family annex) (January 2015)

**EP 4 317 069 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017183285 A
- WO 2013092568 A
- JP 2008274326 A
- JP 2003166093 A